(19) **Europäisches Patentamt / European Patent Office / Office européen des brevets**

(11) **EP 1 293 030 B1**

(12) **EUROPÄISCHE PATENTSCHRIFT**

(45) Veröffentlichungstag und Bekanntmachung des Hinweises auf die Patenterteilung:
**17.10.2007 Patentblatt 2007/42**

(21) Anmeldenummer: **01945125.1**

(22) Anmeldetag: **12.05.2001**

(51) Int Cl.:
*H02M 1/10* (2006.01)   *H02M 1/00* (2007.01)

(86) Internationale Anmeldenummer:
**PCT/EP2001/005436**

(87) Internationale Veröffentlichungsnummer:
**WO 2002/001702 (03.01.2002 Gazette 2002/01)**

(54) **SCHALTUNGSANORDNUNG**

CIRCUIT ARRANGEMENT

ENSEMBLE CIRCUIT

(84) Benannte Vertragsstaaten:
**AT BE CH CY DE DK ES FI FR GB GR IE IT LI LU MC NL PT SE TR**

(30) Priorität: **21.06.2000 DE 10030554**

(43) Veröffentlichungstag der Anmeldung:
**19.03.2003 Patentblatt 2003/12**

(73) Patentinhaber: **Moeller GmbH**
**53115 Bonn (DE)**

(72) Erfinder:
• **MAGYAR, Peter**
  **33813 Oerlinghausen (DE)**
• **IMRE, Hermann**
  **H-1025 Budapest (HU)**

(56) Entgegenhaltungen:
**US-A- 5 953 221**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

Printed by Jouve, 75001 PARIS (FR)

## Beschreibung

Die Erfindung betrifft eine Schaltungsanordnung mit zwei Eingangsanschlüssen zum Anschluß einer Ansteuerspannung und mit zwei Ausgangsanschlüssen zum Anschluß einer Last, wobei die Schaltungsanordnung für Ansteuerspannungen unterschiedlicher Art (AC, DC) und unterschiedlicher Niveaus geeignet ist und die Versorgung der Last mit entweder einem konstanten Gleichspannungssignal oder einem konstanten Gleichstromsignal vorgegebener Größe gewährleistet ist.

Viele elektrische und elektronische Geräte haben die Anforderung, von verschiedenen Spannungsarten bzw. unterschiedlichen Spannungsniveaus angesteuert, bzw. mit elektrischer Energie versorgt werden zu können. So werden zum Beispiel elektronische Relais, Halbleiterschalter, Halbleiterschütze, Sanftanlaufgeräte, elektronische Motorstarter und dergleichen teilweise von speicherprogrammierbaren Steuerungen (SPS), von Hilfsversorgungsnetzen oder von anderen externen Quellen (Klemmenansteuerung) angesteuert.

Eine solche Anordnung zeigt z.B. US 5,953,221.

In einigen Fällen werden von den Ansteuerquellen folgende typische Bemessungsbetätigungsspannungen (Spannungsarten und -niveaus) geliefert,

| z.B.:Ansteuerquelle | Bemessungsbetätigungsspannung |
|---|---|
| SPS-Ansteuerung: | DC, 12-30V |
| Hilfsspannungsnetze: | AC, 110-230V |
| Klemmenansteuerung: | AC, 110-600V |

Das Ein- und Ausschalten der Geräte erfolgt durch Auf- und Abschalten der Ansteuerspannung. Ein niedriges Spannungsniveau soll einen "Aus"- und ein höheres Spannungsniveau einen "Ein"-Zustand auslösen. Aus system- und sicherheitstechnischen Gründen sind diese Ansteuerspannungswerte durch nationale, bzw. internationale Vorschriften und Normen vorgegeben. Soll das anzusteuernde Gerät laut einer dieser Vorschriften z.B. bei 70% des unteren Niveaus der Bemessungsbetätigungsspannung sicher eingeschaltet und bei 20% des letzteren sicher ausgeschaltet sein, gelten für die Ein- und Ausschaltzustände, bzw. für den Betriebsbereich folgende Spannungsbereiche:

| Ansteuerquelle | sicher aus $U_{in}$ kleiner als | sicher ein $U_{in}$ größer als | obere Grenze $U_{in\,Max}=$ |
|---|---|---|---|
| SPS-Ansteuerung: | 2.4V, DC | 8.4V, DC | 30V, DC |
| Hilfsspannungsnetze: | 22V, AC | 77V, AC | 253V, AC |
| Klemmenansteuerung: | 22V, AC | 77V, AC | 660V, AC |

Bei der oberen Grenze des Betriebsbereiches wird auch die normgemäße +10% Spannungserhöhung des Netzes berücksichtigt. Es ist ersichtlich, daß verschiedene Anwendungsfälle eine Ansteuerspannung mit sehr unterschiedlichem Spannungsbereich benötigen. Folgende Ansteuerungsarten sind bekannt:

1. Monoeingang-Ansteuerung
Geräte mit Monoeingang-Ansteuerung haben einen einzigen Ansteuereingang, der für einen einzigen Ansteuerspannungsbereich bzw. eine Ansteuerspannungsart ausgelegt ist.
Für verschiedene Anwendungen müssen also verschiedene Gerätevarianten hergestellt werden, wodurch die Kosten der Fertigung, der Lagerhaltung und der Logistik erhöht werden.

2. Multieingang-Ansteuerung
Durch das Multieingang-Ansteuerungsprinzip entstehen dadurch mehrere Ansteuermöglichkeiten, daß das Gerät mehrere Monospannung-Ansteuerklemmen besitzt und diese Eingänge für die jeweilige Ansteuerspannung ausgelegt sind.
Geräte mit einem höheren Steuerungsaufwand (z.B. elektronische Motor-Steuergeräte mit Drehrichtungsumkehr), benötigen eine Vielzahl von Steuereingängen und erfordern einen dementsprechend erhöhten konstruktiven Aufwand. Zusätzliche Eigänge werden je nach Anwendung vielleicht nie benutzt.

3. Multispannung-Ansteuerung
Eine einfache Möglichkeit für Multispannung-Ansteuerung ergibt sich, wenn die in erster Linie für DC-Ansteuerspannung ausgelegten Eingänge mit einem Eingangsgleichrichter bestückt sind, so dass diese auch für AC-Ansteuerung benutzt werden können. Hierbei ist der Ansteuerspannungsbereich mit der Auslegung des AC-Ansteuerkreises vorbestimmt, so dass der DC-Ansteuerspannungsbereich nicht mehr anpassbar ist.

Gemäß oben genanntem Beispiel können nur dann alle Anwendungsfälle mit einen Gerät abgedeckt werden, wenn die Spannungsniveaus

- für ein sicheres Ausschalten (Sperren der Ansteuerung der Last) bei einer Ansteuerspannung von höchstens

$$U_{DC,aus} = 2,4V$$
$$U_{AC,aus} = 22V$$

- und für ein sicheres Einschalten (Freigabe der Ansteuerung der Last) bei einer Ansteuerspannung von mindestens

$$U_{DC,ein} = 8,4V$$
$$U_{AC,ein} = 77V$$

liegen.

Im beispielgebenden Fall muß daher

- bei DC-Ansteuerung des Ein/Ausschaltvorgangs zwischen 2,4V und 8,4V erfolgen
- bei AC-Ansteuerung die volle und sichere Ausschaltung schon unter 22V AC erfolgen.

Wenn man diese Bedingungen mit einem einfachen Stromkreis, wie z.B. durch Anwendung eines Gleichrichters und eines Pufferkondensators zu erfüllen versucht (Lösung unter 3: Multispannung-Ansteuerung), wird man feststellen, daß die zu dem Spannungswert von 22V AC gehörende Gleichspannung größer ist als 8,4V. Soll also unter 22V AC der Ansteuerzustand "Aus" erreicht werden, ist es ab 8,4V DC nicht möglich, in den Ansteuerzustand "Ein" zu gelangen. Die Spannungsbereiche überlappen sich, d.h. die für die DC-Ansteuerung ausgelegte Schaltung erfüllt nicht die Bedingungen der AC-Ansteuerung, und umgekehrt erfüllt die für die AC-Ansteuerung ausgelegte Schaltung nicht die Bedingungen der DC-Ansteuerung. Wegen der sich überlappenden Spannungsbereiche kann also eine derartige Multispannung-Ansteuerung keine normgerechte Ansteuerung gewährleisten.

Der Erfindung liegt daher die Aufgabe zugrunde, eine Ansteuereinrichtung zu schaffen, die in einem weiten Ansteuerspannungsbereich für unterschiedliche Ansteuerspannungsarten eine normgerechte Ansteuerung gewährleistet.

Die Aufgabe wird erfindungsgemäß durch die kennzeichnenden Merkmale des unabhängigen Anspruches gelöst, während den abhängigen Ansprüchen vorteilhafte Weiterbildungen der Erfindung zu entnehmen sind.

Durch die erfindungsgemäße Verwendung zusätzlicher steuerbarer Schaltmittel und die gezielte Steuerung derselben wird die Freigabe beziehungsweise Sperrung des Laststromes in Abhängigkeit von der Über/Unterschreitung der Ein-/Ausschaltschwelle der Ansteuerspannung realisiert. Hierdurch wird eine selektive Multispannung-Ansteuerung gewährleistet, die die Eigenschaft hat, die Ansteuerspannungsart zu detektieren und in Abhängigkeit davon (AC oder DC), nur in dem dazugehörigen Spannungsbereich der Bemessungsbetätigungsspannung wirksam zu sein.

In einer einfachen Ausführungsform der erfindungsgemäßen Schaltungsanordnung ist diese für jeweils genau einen Ansteuerspannungsbereich einer Spannungsart ausgeführt. In einer Weiterbildung sind aber Einstellmittel zur Vorauswahl unterschiedlicher Spannungsniveaus der Ansteuerspannung für die unterschiedlichen Spannungsarten (AC, DC) vorhanden. Hierdurch können gezielt Ein- und Ausschaltschwellen unterschiedlicher Bemessungsbetätigungsspannungen einer Spannungsart verarbeitet werden, beziehungsweise kann zwischen diesen unterschieden werden.

Erfindungsgemäß werden der Last L neben in Serie geschalteten ersten steuerbaren Schaltmitteln, die in Abhängigkeit der Lastparameter (Laststrom, Lastspannung o.d.) den Laststrom regeln, zweite steuerbare Schaltmittel parallel oder in Serie geschaltet. In einer ersten bevorzugten Ausführung werden die zweiten steuerbaren Schaltmittel durch die Serienschaltung von zwei einzelnen steuerbaren Halbleiterschaltern gebildet, die über die Kombination eines Spannungsdiskriminators und eines Fensterkomparators angesteuert werden.

In einer weiteren Ausführungsform werden die zweiten steuerbaren Schaltmittel durch einen einzigen steuerbaren Halbleiterschalter gebildet, der dann über die Kombination eines Spannungsdiskriminators mit einem einfachen Komparator angesteuert wird.

Die sogenannte Freigabe, beziehungsweise Sperrung der Last erfolgt also je nach Ausführung ob eine Parallel- oder Reihenschaltung der zweiten steuerbaren Schaltmittel zur Last realisiert ist, durch ein Kurzschließen der Last (bei Parallelschaltung der zweiten Schaltmittel) oder eine Auftrennung des Lastschaltkreises (bei Reihenschaltung der zweiten Schaltmittel).

Weitere Einzelheiten und Vorteile der Erfindung ergeben sich aus dem folgenden, anhand von Figuren erläuterten Ausführungsbeispiel. Es zeigen

Figur 1: eine erste mögliche Ausführungsform der erfindungsgemäßen Ansteuerungseinrichtung in schematischer

EP 1 293 030 B1

Darstellung;

Figur 2: charakteristische Signalverläufe bei Ansteuerung der Einrichtung gemäß Fig. 1 mittels DC-Ansteuerspannung;

Figur 3: charakteristische Signalverläufe bei Ansteuerung der Einrichtung gemäß Fig. 1 mittels AC-Ansteuerspannung;

Figur 4: eine weitere mögliche Ausführungsform der erfindungsgemäßen Ansteuerungseinrichtung in schematischer Darstellung;

Figur 5: charakteristische Signalverläufe bei Ansteuerung der Einrichtung gemäß Fig. 4 mittels DC-Ansteuerspannung;

Figur 6: charakteristische Signalverläufe bei Ansteuerung der Einrichtung gemäß Fig. 4 mittels AC-Ansteuerspannung;

Figur 7: einen möglichen Schaltungsaufbau der Ausführungsform gemäß Fig. 4; und

Figur 8: einen möglichen Schaltungsaufbau der Ausführungsform gemäß Fig. 1.

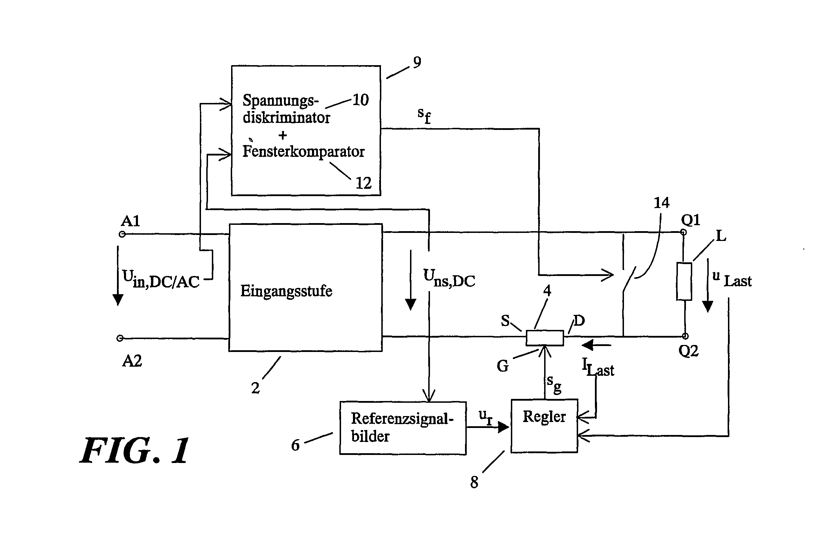

Die erste erfindungsgemäße Ausführung einer selektiven Multispannung-Ansteuerung ist in Fig. 1 dargestellt. Die Anordnung nach Fig. 1 zeigt eine Ansteuerschaltung, bei der die Ansteuerspannung $U_{in,DC/AC}$ an die Eingangsklemmen A1 und A2 und somit an den Eingang einer Baugruppe 2 angeschlossen ist. Die Baugruppe 2 beinhaltet einen bekannten Gleichrichter mit einem Pufferkondensator und eventuell auch die sonst notwendigen Überspannungs- bzw. Überstromschutzelemente und liefert an ihren Ausgang eine nichtstabilisierte Gleichspannung $U_{ns,DC}$. An diese Gleichspannung $U_{ns,DC}$ ist eine Last L angeschlossen. Dabei wird der so gebildete Lastschaltkreis durch erste steuerbare Schaltmittel 4, insbesondere Halbleiterschalter wie bipolarer Transistor, FET, IGBT oder dergleichen, ergänzt. Das Schaltmittel 4 wird über eine Reglereinheit mit Referenzsignalbildner 6 und Regler 8 angesteuert. Dabei versorgt die nichtstabilisierte Gleichspannung $U_{ns,DC}$ auch den Referenzsignalbilder 6, der ein Referenzsignal $u_r$ für den Regler 8 bildet. Werden die Lastspannung $u_{Last}$ und/oder der Laststrom $I_{Last}$ erfaßt und dem Regler 8 zugeführt und außerdem das Reglerausgangssignal $s_g$ dem Steuereingang des ersten steuerbaren Schaltmittels 4 zugeführt, werden die Lastspannung $u_{Last}$ und/oder der Laststrom $I_{Last}$ in Abhängigkeit hiervon geregelt.

Diese bekannte Stabilisatorschaltung wird erfindungsgemäß noch durch zweite steuerbare Schaltmittel 14 zur Freigabe bzw. Sperrung des Lastschaltkreises ergänzt. Die Mittel 9 zur Ansteuerung umfassen insbesondere einen Spannungsdiskriminator 10 und einen Fensterkomparator 12. An einen ersten Eingang der Ansteuermittel 9 wird die Ansteuerspannung $U_{in,DC/AC}$ und an deren zweiten Eingang die nichtstabilisierte Gleichspannung $U_{ns,DC}$ angeschlossen. Das zweite steuerbare Schaltmittel 14 ist dagegen mit der Last L parallel geschaltet und wird durch das Freigabesignal $s_f$ gesteuert. Letzteres ist mit dem Ausgangssignal der Ansteuermittel 9 identisch. Hat das Signal $s_f$ den logischen Wert 'h' ("logisch eins"), dann ist das zweite steuerbare Schaltmittel 14 nicht leitend (Schalter ist geöffnet). Hat das Signal $s_f$ dagegen den logischen Wert 'l' "logisch null"), dann ist das zweite steuerbare Schaltmittel 14 leitend (Schalter geschlossen, d.h. stromführend).

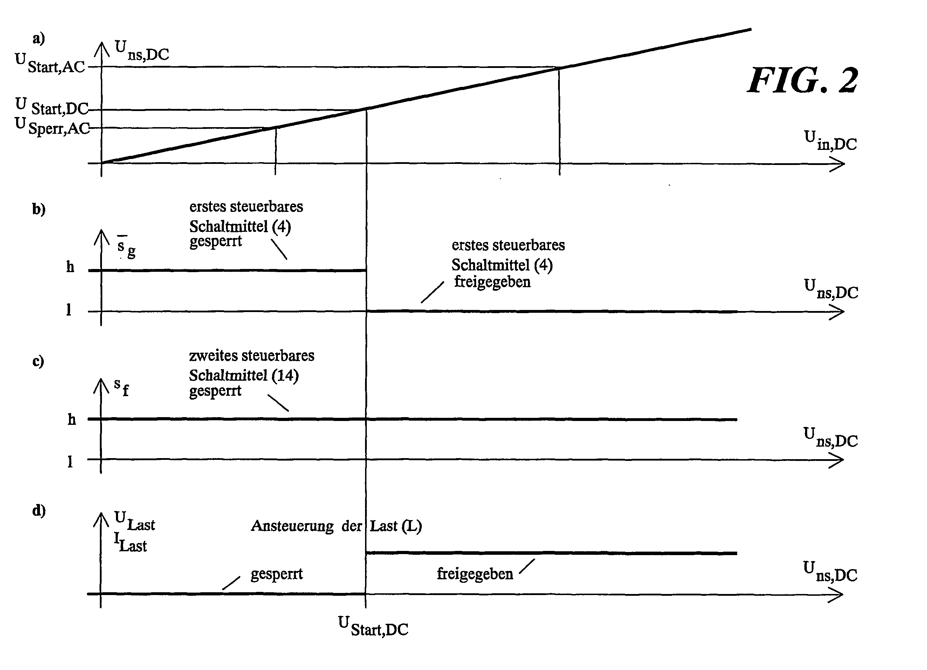

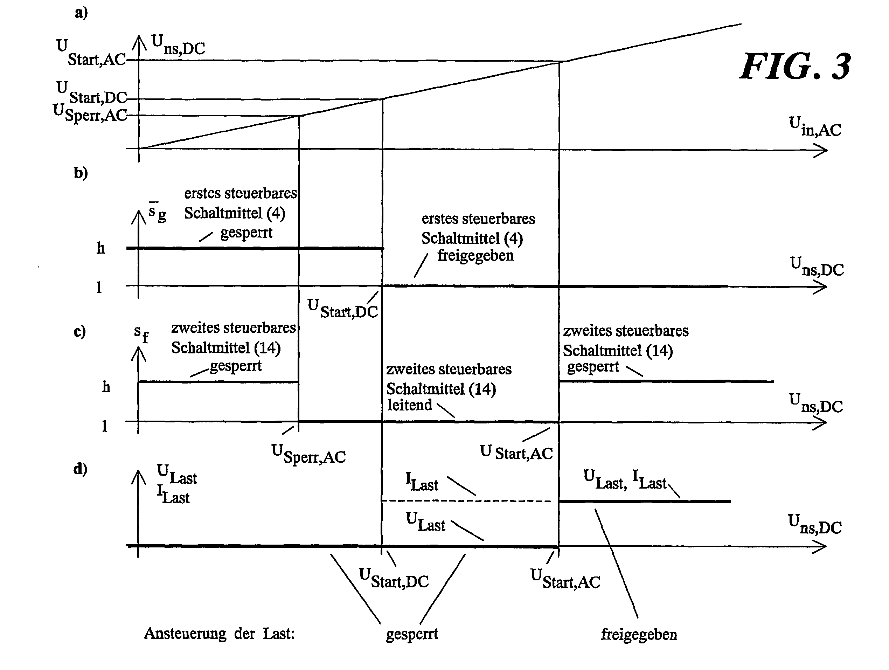

In Fig. 2 und 3 ist die Arbeitsweise der erfindungsgemäßen Schaltungsanordnung gemäß Fig. 1 anhand der charakteristischen Signale erklärt. Dabei ist in Fig. 2 die Arbeitsweise bei DC-Ansteuerspannung ($U_{in,DC/AC} = U_{in,DC}$) und Fig. 3 bei AC-Ansteuerspannung ($U_{in,DC/AC} = U_{in,AC}$) gezeigt. In beiden Figuren zeigen die Teilbilder

a) die nichtstabilisierte Gleichspannung $U_{ns,DC}$ in Abhängigkeit von der Ansteuerspannung $U_{in,DC}$, bzw. $U_{in,AC}$,
b) den Verlauf des Reglerausgangssignals $\overline{s_g}$,
c) den Verlauf des Freigabesignals $s_f$,
d) den Verlauf des Laststromes $I_{Last}$ und der Lastspannung $u_{Last}$.

Das Ornament "-" bedeutet die Negation des Signals.

Wird die Ansteuerspannung $U_{in,DC}$ bzw. $U_{in,AC}$ von dem Wert Null ausgehend erhöht, dann erhöht sich gleichzeitig auch die nichtstabilisierte Gleichspannung $U_{ns,DC}$. Erreicht diese Spannung den Spannungswert $U_{Start,DC}$, wird das erste steuerbare Schaltmittel 4 im Lastschaltkreis durch das Reglerausgangssignal $s_g$ freigegeben (Schaltmittel 4 leitend) und unter Berücksichtigung der Lastparameter der Laststrom $I_{Last}$ und/oder die Lastspannung $u_{Last}$ geregelt.

DC-Ansteuersignal

Bei DC-Ansteuerspannung wird von den Ansteuermitteln 9 ein Freigabesignal $s_f$ mit dem Wert 'h' ausgegeben. Dadurch wird das zweite steuerbare Schaltmittel 14 gesperrt (nicht leitend), wodurch die Ansteuerung der Last L in dem Bereich $U_{ns,DC} \geq U_{Start,DC}$ freigegeben wird. Damit wird die Spannung $u_{Last}$ auf die Last L geschaltet und durch die Last L fließt der Strom $I_{Last}$.

### AC-Ansteuersignal

Bei AC-Ansteuerspannung muß die Ansteuerung der Last L im allgemeinen bei einer Spannung von $U_{Start,AC}$ > $U_{Start,DC}$ freigegeben werden. Würde keine andere Maßnahme ergriffen, wäre die Ansteuerung der Last L aber schon bei $U_{ns,DC}$ = $U_{Start,DC}$ freigegeben. Dies zu verhindern, muß die Ansteuerung schon bei einer Spannung von $U_{Sperr,AC}$ < $U_{Start,DC}$ gesperrt werden, damit in dem ganzen Bereich $U_{Sperr,AC}$< $U_{ns,DC}$< $U_{Start,AC}$ eine Ansteuerung der Last L unterbunden werden kann.

Dies wird erfindungsgemäß erreicht, indem noch vor dem Erreichen des Spannungswertes $U_{Start,DC}$ die Last L mit Hilfe des zweiten steuerbaren Schaltmittels 14 kurzgeschlossen und dadurch verhindert wird, daß eine Spannung auf die Last L geschaltet wird. Der durch das Referenzsignal $u_r$ bestimmte Strom $I_{Last}$ fließt damit nicht durch die Last L, sondern durch das parallel geschaltete Schaltmittel 14.

Bei weiterer Erhöhung der Spannung, wenn der Bereich $U_{ns,DC} \geq U_{Start,AC}$ erreicht ist, wird erfindungsgemäß das zweite steuerbare Schaltmittel 14 nicht leitend geschaltet und dadurch der durch die mittels Regeleinrichtung 9 angesteuerten ersten steuerbaren Schaltmittel 4 freigeschaltete Strom $I_{Last}$ auf die Last L geschaltet. Am Ausgang erscheint also die Lastspannung $u_{Last}$>0. Die Ansteuerung der Last L ist dadurch freigegeben.

Diese Arbeitsweise erreicht man, wenn bei AC-Ansteuerspannung

$s_f$="l" wenn $U_{Sperr,AC}$< $U_{ns,DC}$< $U_{Start,AC}$
und
$s_f$="h" sonst

gilt. Diese Gesetzmäßigkeit der Erzeugung des Freigabesignals $s_f$ entspricht einem Fensterkomparator, weil nur in dem Fenster {$U_{Sperr,AC}$ , $U_{Start,AC}$} $s_f$="l" ist.

Oben wurde gezeigt, daß bei DC-Ansteuerspannung dagegen im gesamten Spannungsbereich der Wert $s_f$="h" gehalten werden muß. Der Fensterkomparator muß daher mit einem Spannungsdiskriminator kombiniert werden, der das Sperrsignal nur bei AC-Ansteuerspannung ermöglicht.

Dadurch läßt sich die Wirkungsweise der Ansteuermittel 9 (Spannungsdiskriminator 10, Fensterkomparator 12) wie folgt beschreiben:

$s_f$="l" wenn [$U_{Sperr,AC}$< $U_{ns,DC}$< $U_{Start,AC}$] UND [$U_{in,DC/AC}$= $U_{in,AC}$]
und
$s_f$="h" sonst.

### Zweite zweckmäßige Ausführung

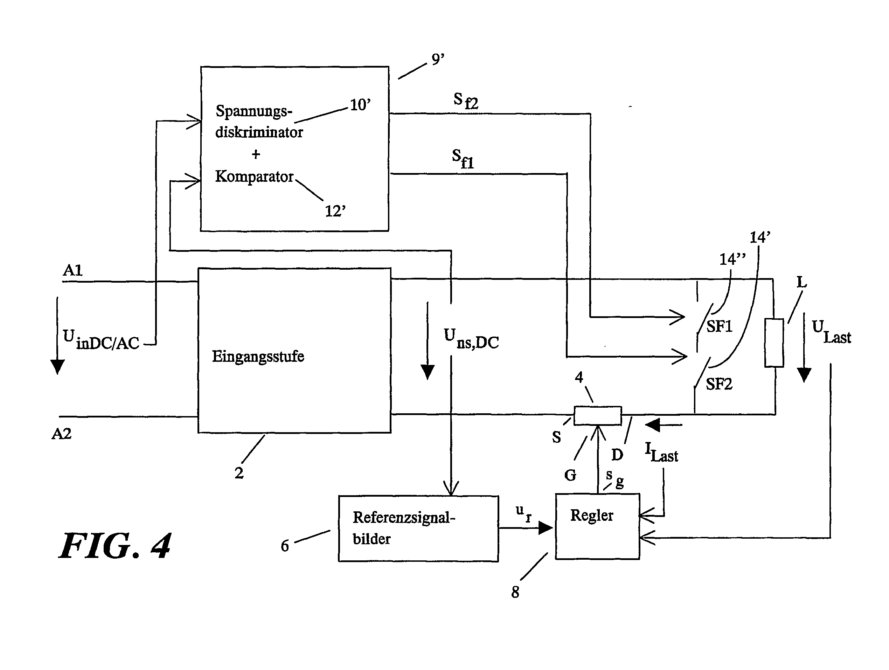

Eine zweite zweckmäßige Ausführung der erfindungsgemäßen Ansteuereinrichtung ist in Fig. 4 dargestellt. Wirkungsgleiche Teile werden mit gleichen Bezugszeichen versehen. Hier wird gegenüber der ersten Ausführungsform mit einem Spannungsdiskriminator 10 und einem Fensterkomparator 12 der Fensterkomparator 12 durch einen einfachen Komparator 12' ersetzt. Ferner wird das zweite steuerbare Schaltmittel 14 zur Freigabe der Last L durch zwei in Serie geschaltete Freigabeschalter 14'und 14" ersetzt. Die so modifizierten Ansteuermittel 9' haben zwei Ausgänge zur Generierung von zwei verschiedenen Freigabesignalen, einem ersten Freigabesignal $s_{f1}$ und einem zweiten Freigabesignal $s_{f2}$.

Das erste Schaltmittel 14', auch Freigabeschalter SF1 genannt, wird durch das erste Freigabesignal $s_{f1}$ und das zweite Schaltmittel 14", auch Freigabeschalter SF2 genannt, durch das zweite Freigabesignal $s_{f2}$ gesteuert.

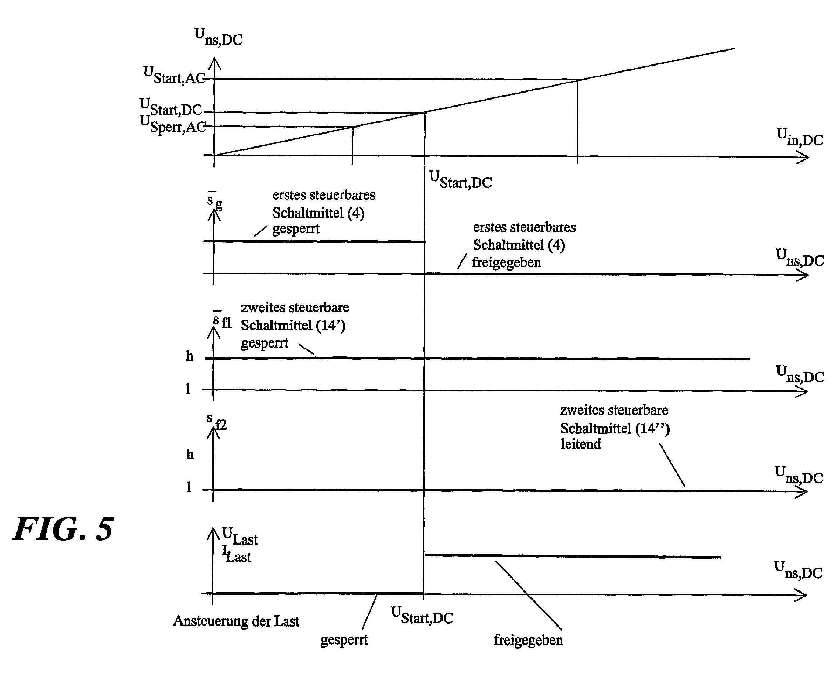

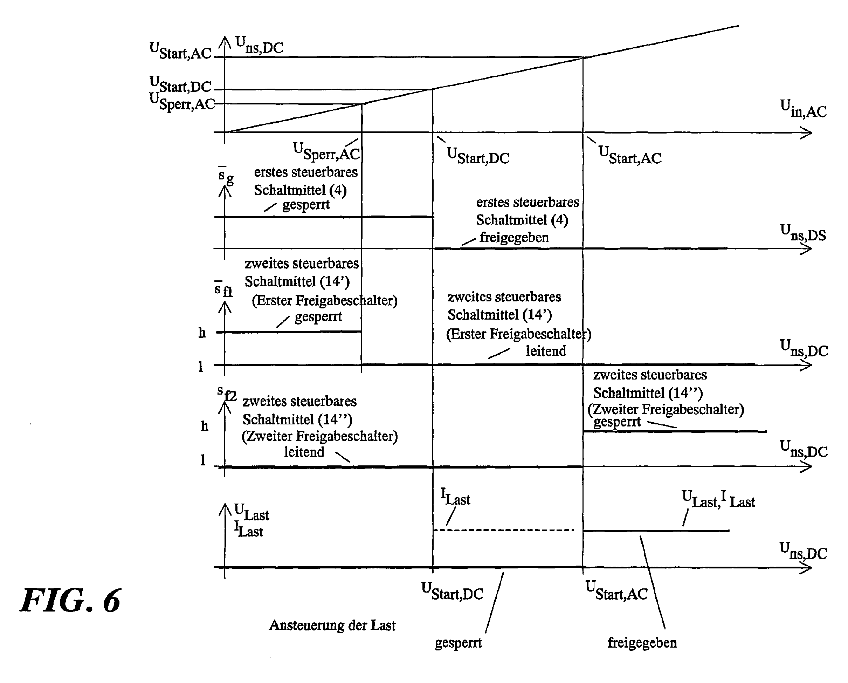

Die Arbeitsweise der Schaltungsanordnung nach Fig. 4 wird anhand der Fig. 5 und 6 erläutert. Die beiden Figuren zeigen jeweils in den Teilbildern

a) die nichtstabilisierte Gleichspannung $U_{ns,DC}$ in Abhängigkeit von der Ansteuerspannung $U_{in,DC}$, bzw. $U_{in,AC}$
b) den Verlauf des Reglerausgangssignals $s_g$,
c) den Verlauf des ersten Freigabesignals $\overline{s}_{f1}$,
d) den Verlauf des zweiten Freigabesignals $s_{f2}$,
e) den Verlauf des Laststromes $I_{Last}$ und der Lastspannung $u_{Last}$.

### DC-Ansteuersignal

Bei DC-Ansteuerspannung (Fig. 5) werden von den Ansteuermitteln 9' die Freigabesignale $\overline{s}_{f1}$= "h" und $s_{f2}$= "l" geliefert. Damit ist der erste Freigabeschalter 14' nicht leitend und der zweite Freigabeschalter 14" leitend geschaltet. Daraus resultierend ist der Lastschaltkreis freigegeben. Die Freigabe der Ansteuerung der Last erfolgt also in dem Zeitpunkt, in dem das erste über die Regeleinrichtung 6, 8 gesteuerte Schaltmittel 4 leitend geschaltet wird. Dies geschieht, wenn die Spannung $U_{ns,DC}$=$U_{Start,DC}$ erreicht wird, und bleibt auch in dem Bereich $U_{ns,DC}$>$U_{Start,DC}$ erhalten, was bedeutet, daß bei DC-Ansteuerspannung die Ansteuerung der Last L alleine durch das erste steuerbare Schaltmittel 4 bestimmt ist.

**AC-Ansteuersignal**

Bei AC-Ansteuerung dagegen, weil $U_{Start,AC} > U_{Start,DC}$ ist, muß verhindert werden, daß die Ansteuerung der Last L frühzeitig durch das Schaltmittel 4 freigegeben wird. Dies geschieht erfindungsgemäß dadurch, daß noch vor dem Erreichen von $U_{ns,DC} = U_{Start,DC}$ außer dem leitenden zweiten Freigabeschalter 14" auch der erste Freigabeschalter 14' in den leitenden Zustand gesteuert wird. Dadurch wird die Last L durch die beiden Freigabeschalter 14', 14" kurzgeschlossen. Folglich fließt bei der Freigabe durch das erste steuerbare Schaltmittel 4 der Strom $I_{Last}$ nicht durch die Last L, sondern durch die beiden Freigabeschalter 14' und 14". Die Ansteuerung der Last L wird dann freigegeben, wenn beim Erreichen von $U_{ns,DC} = U_{Start,AC}$ der zweite Freigabeschalter 14" geöffnet (nicht leitend geschaltet) wird, wodurch der Strom $I_{Last}$ von den beiden Freigabeschaltern 14',14" (SF1, SF2) auf die Last L kommutiert. Diese Arbeitsweise wird dadurch erreicht, daß die beiden Ansteuersignale die Werte

$\overline{s}_{f1}$ "h" wenn $U_{ns,DC} < U_{Sperr,AC}$ sonst $\overline{s}_{f1}$ "l"
$s_{f2} =$ "h" wenn $U_{ns,DC} \geq U_{Start,AC}$ sonst $s_{f2} =$ "l"
besitzen.

Die Bedingungen für die DC- und AC-Ansteuerspannung werden also dann erfüllt, wenn die beiden, von den Ansteuermitteln 9' gelieferten Freigabesignale folgenden Verlauf haben:

$\overline{s}_{f1} =$ "l" wenn $[U_{ns,DC} \geq U_{Sperr,AC}]$ UND $[U_{in,DC/AC} = U_{in,AC}]$
$\overline{s}_{f1} =$ "h" sonst
und
$s_{f2} =$ "h" wenn $[U_{ns,DC} \geq U_{Start,AC}]$ UND $[U_{in,DC/AC} = U_{in,AC}]$
$s_{f2} =$ "l" sonst.

**Aufbau der Schaltungsanordnung (Ausführungsform nach Fig. 4)**

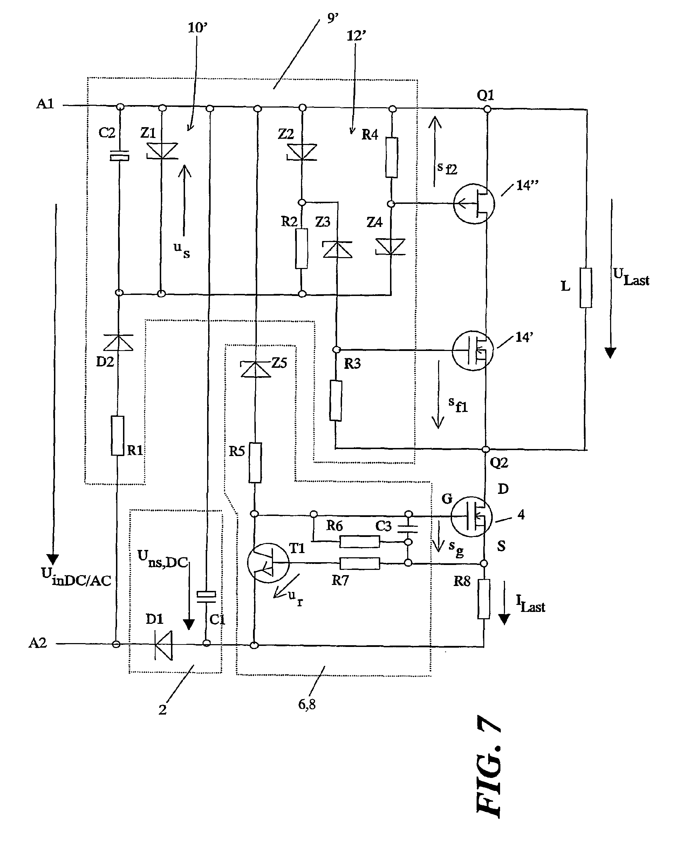

Ein Beispiel für die schaltungstechnische Realisierung der erfindungsgemäßen Ansteuereinrichtung in der Ausführungsform nach Fig. 4 ist in Fig. 7 dargestellt.

Die Baugruppe 2 wird hier durch eine Diode D1 und einen Kondensator C1 gebildet. Dabei liegt die Diode D1 im Eingangszweig von A2 (Kathode in Richtung A2), während die Anodenseite über den Kondensator C1 mit dem Eingang A1 verbunden ist.

Parallel zum Kondensator C1 ist der Lastschaltkreis mit der Last L (zwischen den Ausgängen Q1, Q2) und dem hierzu in Serie geschalteten ersten steuerbaren Schaltmittel 4 geschaltet. Zur Erfassung des Laststromes $I_{Last}$ befindet sich ferner ein Widerstand R8 im Lastschaltkreis.

Zum Zwecke der selektiven Spannungsansteuerung wird diese Schaltungsanordnung durch zweite steuerbare Schaltmittel 14', 14", zwei in Serie geschaltete Freigabeschalter, ergänzt, die hier der Last L parallelgeschaltet sind.

Die Freigabeschalter 14',14" sind als Transistoren (z.B. N-Kanal-FET, J-FET) ausgeführt und werden über einen aus einem Spannungsdiskriminator 10' und einem Komparator 12' bestehenden Schaltungsteil (Ansteuermittel 9') gesteuert. Dabei wird der, der Unterscheidung der anliegenden Ansteuerspannung $U_{inDC/AC}$ dienende Spannungsdiskriminator 10' durch die Bauelemente R1, D2, C2 und Z1 gebildet, wobei zwischen die Eingänge A1, A2 parallel zum Kondensator C1, ausgehend von A1 in Serie geschaltet C2, D2 und R1 angeordnet sind und parallel zu C2 die Zenerdiode Z1 liegt. Z1 ist dabei anodenseitig mit A1 verbunden. Die über Z1 abfallende Spannung $U_s$ bildet das Eingangssignal für einen nachgeschalteten Ausgangsspannungsbildner zur Erzeugung des ersten Ansteuersignals $s_{f1}$ zur Ansteuerung des Schaltmittels 14'. Der Ausgangsspannungsbildner umfaßt die Bauelemente Z2, R2, Z3, R3 wobei die Serienschaltung der Zenerdiode Z2 und Widerstand R2 der Zenerdiode Z1 parallelgeschaltet sind. Dabei sind die Zenerdioden Z1, Z2 anodenseitig miteinander verbunden. Zwischen der Kathode von Z2 und dem Widerstand R2 greift die Zenerdiode Z3 mit ihrer Kathode an und ist anodenseitig sowohl mit dem Steuranschluß des Freigabeschalters 14'als auch mit dem Widerstand R3 verbunden. Der Widerstand R3 ist mit seinem anderen Ende mit dem Ausgang Q2, also mit dem Verbindungspunkt von Last L, Freigabeschalter 14'und dem ersten Schaltmittel 4 verbunden. Die über den Widerstand R3 abfallende Spannung bildet das erste Ansteursignal $s_{f1}$ für den ersten Freigabeschalter 14'.

Als Komparator 12' wirkt hier eine Serienschaltung aus den Bauelementen Widerstand R4 und Zenerdiode Z4 die ebenfalls der Zenerdiode Z1 parallelgeschaltet ist. Dabei sind die Zenerdioden Z1 und Z4 kathodenseitig miteinander verbunden. Der Verbindungspunkt von R4 und Z4 ist auf den Steueranschluß des Schaltmittels 14" geführt. Somit bildet die über R4 abfallende Spannung das Ansteuersignal $s_{f2}$ für den zweiten Freigabeschalter 14".

Die Reglereinheit 6, 8 besteht im wesentlichen aus dem als Regler fungierenden Transistor T1, der mit weiteren Bauelementen wie der Zenerdiode Z5, den Widerständen R5, R6, R7 und dem Kondensator C3 beschaltet ist. Dabei ist der Transistor T1 mit seiner Kollektor-Emitter-Strecke in Serie mit Z5 und R5 zwischen A1 und A2, also parallel zu C1, geschaltet. Ausgehend von der Verbindung von R5 zum Kollektor von T1 führt einerseits eine Serienschaltung von R6 und R7 auf die Basis von T1 und weiterhin eine Dirktverbindung zum Steueranschluß des ersten Schaltmittels 4. Parallel zu R6 ist ein Kondensator C3 angeordnet. Schließlich wird der Verbindungspunkt R6/R7 mit dem Verbindungspunkt von Schaltmittel 4 zu R8 verbunden (entspricht hier dem Sourceanschluß des N-Kanal-FET im Lastschaltkreis).

**Funktionsweise der Schaltungsanordnung**

Die Ansteuerspannung ($U_{in,DC/AC}$) ist an die Eingänge A1 und A2 angeschlossen.

Bei DC-Ansteuerung wird der Kondensator C1 durch die Diode D1 auf die Spannung $U_{ns,DC}$ aufgeladen, wenn A1 positiv und A2 negativ sind. Bei umgekehrter Polarität wirkt D1 als Polaritätsschutz. Die nichtstabilisierte Gleichspannung $U_{ns,DC}$ speist die Reglereinheit 6, 8. Hier wird als Beispiel eine Laststromregelung gezeigt, bei der die auf dem Widerstand R8 liegende Spannung als Istwert der Regelung benutzt wird. Als Regler wird der Transistor T1 benutzt. Dessen Basis-Emitter-Spannung bildet das Referenzsignal $u_r$. Dadurch ist der Referenzspannungsbildner 6 verwirklicht. Die Bauelemente Z5, R5, R6 und R7 dienen zur Einstellung des Arbeitspunktes des Transistors T1.

Erreicht die nichtstabilisierte Gleichspannung $U_{ns,DC}$ den durch die der Arbeitspunkteinstellung dienenden Bauelemente bestimmten Wert von $U_{Start,DC}$, wird das Schaltmittel 4 durch T1 freigegeben. Damit erfolgt die Freigabe der Aunsteuerung der Last L.

**DC-Ansteuerspannung**

Bei DC-Ansteuerspannung nimmt das Ansteuersignal $s_{f2}$ ständig den Wert von Null an. Aus diesem Grunde ist der eine Freigabeschalter 14" (SF2) ständig leitend. Der andere Freigabeschalter 14' (SF1) ist dagegen gesperrt (nicht leitend), weil $u_s \approx 0$ ist und Z3 verhindert, daß SF1 von $u_{Last}$ ausgesteuert wird. Durch den gesperrten Freigabeschalter 14' ist der resultierende Freigabekreis nicht leitend, also unwirksam auf die Last L. Die Freigabe der Last L wird alleine durch das erste Schaltmittel 4 (Längsregler) bestimmt.

**AC-Ansteuerspannung**

Bei AC-Ansteuerspannung wird die nichtstabilisierte Gleichspannung $U_{ns,DC}$ durch positive Halbwellen in dem Kreis A1,C1,D1,A2 erzeugt. In den negativen Halbwellen dagegen wird der Kondensator C2 durch D2 und R1 aufgeladen. Diese Spannung wird von Z1 begrenzt und stellt die Hilfspannung $u_s$ für die Spannungsauswahl dar. Bei niedrigeren Spannungswerten ist die Zenerdiode Z4 im Sperrzustand, wodurch die Spannung auf dem Widerstand R4 (zweites Freigabesignal $s_{f2}$) gleich Null und somit der P-Channel J-FET (SF2) leitend ist. Ab $U_{ns,DC}=U_{Sperr,AC}$ fließt ein Strom durch R2, Z3, R3 und Schaltmittel 4. Damit entsteht ein positiver Spannungsabfall auf R3 ($s_{f1}>0$). Diese Spannung steuert den Freigabeschalter SF1 (N-Channel-FET) in den leitenden Zustand. Beide Freigabeschalter SF1, SF2 sind also im leitenden Zustand, wodurch verhindert wird, daß die Last bei $U_{nc,DC}=U_{Start,DC}$ freigegeben wird.

Bei höheren Spannungswerten dagegen bleibt SF1 weiterhin leitend und Z4 erreicht den Stromführungszustand. Dies verursacht die Erhöhung von $s_{f2}$. Demzufolge wird SF2 in den gesperrten Zustand gesteuert und die Ansteuerung der Last L freigegeben. Dies geschieht bei der Spannung $U_{ns,DC}=U_{Start,AC}$. Mit dieser Arbeitweise wird erreicht, daß die Last bei AC-Ansteuerspannung nur bei $U_{ns,DC}=U_{Start,AC}$ freigegeben wird.

Mit den unterschiedlichen Schaltzuständen der beiden Freigabeschalter 14', 14" (SF1, SF2) wird also erfindungsgemäß erreicht, daß die Ansteuerung der Last bei einem spannungsartabhängig unterschiedlichem Spannungsniveau freigegeben wird.

Dies wird dadurch erreicht, daß bei AC-Eingangspannung die beiden Dioden D1 und D2 die beiden Zwischenkreiskondensatoren C1 und C2 getrennt aufladen und dadurch die AC-Ansteuerspannung identifizieren können. Dabei ist wesentlich, daß die durch die negativen Halbwellen erzeugte Spannung am Kondensator C2 die Aussteuerung schon bei niedrigen Spannungswerten sperrt. Wird die AC-Ansteuerspannung also während einer positiven Halbwelle eingeschaltet, erfolgt diese Sperrwirkung nur in der nächsten Halbperiode, wodurch die Spannung am Ausgang evtl. für diese Zeitdauer von einer Halbperiode (10ms bei 50Hz) auftritt. Dies zu verhindern, muß die Freigabe des ersten Schaltmittels 4 dynamisch verzögert werden. Dies geschieht mit Hilfe des Kondensators C3.

**Aufbau der Schaltungsanordnung (Ausführungsform nach Fig.1)**

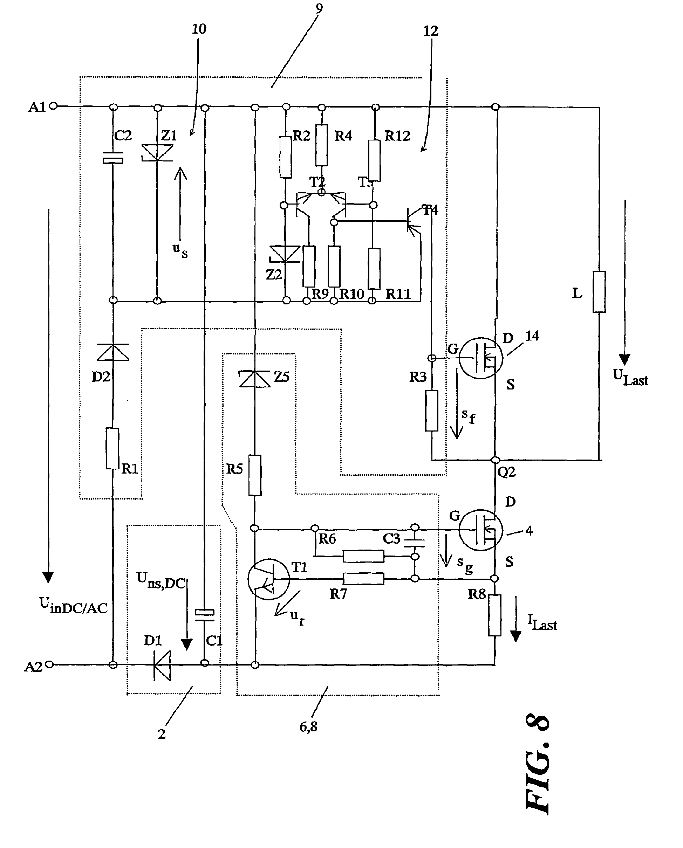

Ein Beispiel für die schaltungstechnische Realisierung der erfindungsgemäßen Ansteuereinrichtung in der Ausführungsform nach Fig. 1 ist in Fig. 8 dargestellt.

Die Schaltung ist im wesentlichen analog zu der Schaltung gemäß Fig. 7 aufgebaut, wobei parallel zur Last L die zweiten steuerbaren Schaltmittel 14 durch einen einzelnen steuerbaren Halbleiterschalter ausgeführt sind und ferner die Ansteuerung dieses Halbleiterschalters über einen Fensterkomparator anstelle eines einfach ausgeführten Komparators erfolgt.

## Funktionsweise der Schaltungsanordnung

Bei DC-Ansteuerung ist die Hilfsspannung $u_s$ des Spannungsdiskriminators 10 gleich null so dass der Halbleiterschalter nicht leitend geschaltet ist und der über das erste steuerbare Schaltmittel 4 geregelte Laststrom duch die Last fließt.

Bei AC-Ansteuerung entsteht eine Hifsspannung $u_s$ verschieden von null, so dass mit zunehmender Ansteuerspannung $U_{in,AC}$ die Hifsspannung $u_s$ und die nichtstabilisierte Gleichspannung $U_{ns,DC}$ auch größer werden. Die beiden Spannungen enstehen aus der positiven und der negativen Halbwelle der Eingangsspannung und sind somit etwa gleich groß.

Mit zunehmender Spannung wird der Transistor in den leitenden Zustand überführt, wodurch die Transistoren T4 und SF leitend geschaltet werden. Die Ausgangspannung an der Last L kann also nicht entstehen, weil die Last kurzgeschlossen ist. Dies geschieht bei dem Ansteuerspannungswert $U_{ns,DC}=U_{Sperr,AC}$ und es gelten die folgenden Bedingungen:

$$\frac{U_{Sperr,AC}\dfrac{R_{12}}{R_{11}+R_{12}}-R_{BE,T3}}{R_4}R_{10}=U_{BE,T4}$$

und

$$\frac{R_{10}}{R_4}\leq\frac{R_{11}}{R12}$$

.

Hier bedeuten $U_{BE,T3}$ und $U_{BE,T4}$ die Basis-Emitter-Spannungen der Transistoren T3 und T4. Wird die Eingangsspannung weiter erhöht, dann beginnt Z2 zu leiten und T2 anzusteuern. Durch die Rückkoplung über R4 wird dann T3 und damit T4 gesperrt. Es entsteht also kein Spannungsabfall an R3, dadurch wird weiterhin auch SF gesperrt. In diesem Moment entsteht die durch den Regler 8 und das erste steuerbare Schaltmittel 4 bestimmte Lastspannung $U_{Last}$ am Ausgang. Dies geschieht bei der Spannungswert $U_{ns,DC}=U_{Start,AC}$ und kann gemäß der Formel

$$U_{Start,AC}-U_{Z2}\approx U_{Start,AC}\frac{R_{12}}{R_{11}+R_{12}}$$

berechnet werden, wobei $U_{Z2}$ die Zenerspannung der Diode Z2 ist.

Man sieht also, daß die Ausgangsspannung in dem Spannungsfenster $U_{Sperr,AC} < U_{ns,DC} < U_{Start,AC}$ nicht freigegeben ist.

Die vorliegende Erfindung ist nicht auf die vorstehend beschriebenen Ausführungsformen beschränkt, sondern umfaßt auch alle im Sinne der Erfindung gleichwirkenden Ausführungsformen. So sind zum Beispiel auch Schaltungsanordnungen mit seriell geschalteten Freigabeschalter(n) umfaßt. Fig. 1 und Fig. 4 zeigen prinzipielle Anordnungen, bei denen das/die Schaltmittel 14; 14', 14" mit der Last L parallel geschaltet sind. Das/die Schaltmittel 14; 14',14" können aber auch mit der Last L in Serie geschaltet werden. In diesem Falle gilt weiterhin die oben (anhand der Fig. 2,3, und 5,6, bzw. 7) ausführlich erklärte Arbeitsweise. Allerdings müssen für die Ansteuerung an Stelle der Freigabesignale $s_{f1}$, und $s_{f2}$ die negierten (invertierten) Signale $\overline{s}_{f1}$ und $\overline{s}_{f2}$ für die Ansteuerung benutzt werden.

## Patentansprüche

1. Schaltungsanordnung mit zwei Eingangsanschlüssen (A1, A2) zum Anschluß einer Ansteuerspannung ($U_{in,DC/AC}$) und mit zwei Ausgangsanschlüssen (Q1, Q2) zum Anschluß einer Last (L),

- wobei die beiden Eingänge (A1, A2) der Schaltungsanordnung mit Ansteuerspannungen ($U_{in,DC/AC}$) unterschiedlicher Art (AC, DC) beaufschlagbar sind **dadurch gekennzeichnet, daß**

- in Abhängigkeit von einer definierten Einschaltschwelle und einer definierten Ausschaltschwelle der Ansteuerspannung die Last (L) versorgbar ist, umfassend

- eine Baugruppe (2) zur Umsetzung der Ansteuerspannung ($U_{in,DC/AC}$) in eine davon linear abhängige Gleichspannung ($U_{ns,DC}$) zur Versorgung der Last L,

- erste steuerbare Schaltmittel (4) zum Schließen und Öffnen des Lastschaltkreises,

- eine Reglereinheit (6, 8) zur Ansteuerung der ersten Schaltmittel (4) in Abhängigkeit von Lastparametern,

- Mittel (10; 10') zur Diskriminierung unterschiedlicher Spannungsarten der Ansteuerspannung ($U_{in,DC/AC}$),

- Mittel (12; 12') zur Detektion der Ein- und Ausschaltschwelle,

- zweite steuerbare Schaltmittel (14; 14', 14") zur Freigabe beziehungsweise Sperrung des Lastschaltstromes und

- Mittel (9; 9') zur Ansteuerung der zweiten Schaltmittel (14; 14', 14") in Abhängigkeit von der Über- bzw. Unterschreitung der Ein- bzw. Ausschaltschwelle.

2. Schaltungsanordnung nach Anspruch 1, **dadurch gekennzeichnet, dass** die Baugruppe (2) eine zwischen den Eingangsanschlüssen A1, A2 angeordnete Serienschaltung einer Diode D1 und eines Kondensators C1 umfaßt.

3. Schaltungsanordnung nach Anspruch 1 oder 2, **dadurch gekennzeichnet, dass** die ersten steuerbaren Schaltmittel (4) durch einen in Serie zur Last L geschalteten steuerbaren Halbleiterschalter, insbesondere einen N-Kanal-FET, gebildet sind.

4. Schaltungsanordnung nach einem oder mehreren der vorherigen Ansprüche, **dadurch gekennzeichnet, dass** die Mittel (10, 10') zur Diskriminierung der Ansteuerspannung durch eine zwischen den Eingangsanschlüssen A1, A2 angeordnete Serienschaltung mit einer Parallelanordnung eines Kondensators C2 und einer Zenerdiode Z1, einer Diode D2 und einem Widerstand R1 gebildet ist.

5. Schaltungsanordnung nach Anspruch 4, **dadurch gekennzeichnet, dass** parallel zur Zenerdiode Z1 ein aus einer Serienschaltung von Zenerdiode Z2 und Widerstand R2 bestehender Spannungsbildner parallelgeschaltet ist und die Zenerdioden Z1; Z2 anodenseitig miteinander verbunden sind.

6. Schaltungsanordnung nach einem oder mehreren der vorherigen Ansprüche, **dadurch gekennzeichnet, dass** die zweiten steuerbaren Schaltmittel (14', 14") durch zwei in Serie oder parallel zur Last L geschaltete steuerbare Halbleiterschalter gebildet sind.

7. Schaltungsanordnung nach einem oder mehreren der vorherigen Ansprüche, **dadurch gekennzeichnet, dass** die Mittel (9') zur Ansteuerung der zweiten Schaltmittel (14', 14") durch die als Komparator ausgebildeten Detektionsmittel (12') und die Mittel (10') zur Diskriminierung der Ansteuerspannnung gebildet sind.

8. Schaltungsanordnung nach einem oder mehreren der vorherigen Ansprüche, **dadurch gekennzeichnet, dass** die Detektionsmittel (12') als aus einer Serienschaltung eines Widerstandes R4 und einer Zenerdiode Z4 gebildeter Komparator ausgebildet sind, die parallel zu der Zenerdiode Z1 geschaltet sind und wobei die Zenerdioden Z1 und Z4 kathodenseitig miteinander verbunden sind.

9. Schaltungsanordnung nach Anspruch 8, **dadurch gekennzeichnet, dass** der Komparator in seinem Verbindungspunkt von Widerstand R4 und Anode der Zenerdiode Z4 mit dem Steueranschluß des einen Schaltmittels (14") verbunden ist.

10. Schaltungsanordnung nach Anspruch 7 oder 8, **dadurch gekennzeichnet, dass** der Spannungsbildner Z2, R2 in seinem Verbindungspunkt von der Kathode der Zenerdiode Z2 und dem Widerstand R2 mit der Kathode einer Zenerdiode Z3 verbunden ist, die anodenseitig einerseits auf den Steueranschluß des anderen Schaltmittels (14') geführt ist und andererseits über einen Widerstand R3 auf den Verbindungspunkt dieses Schaltmittels (14') mit dem ersten steuerbaren Schaltmittel (4) geführt ist.

11. Schaltungsanordnung nach einem oder mehreren der vorherigen Ansprüche 1-5, **dadurch gekennzeichnet, dass** die zweiten steuerbaren Schaltmittel (14) durch einen parallel oder in Serie zur Last geschalteten steuerbaren Halbleiterschalter gebildet sind.

**12.** Schaltungsanordnung nach Anspruch 11, **dadurch gekennzeichnet, dass** und die Mittel (9) zur Ansteuerung des Schaltmittels (14) durch die als Fensterkomparator ausgebildeten Detektionsmittel (12) und die Mittel (10) zur Diskriminierung der Ansteuerspannung gebildet sind.

**13.** Schaltungsanordnung nach einem oder mehreren der vorherigen Ansprüche, **dadurch gekennzeichnet, dass** die Reglereinheit (6, 8) zur Regelung des Laststromes ausgebildet ist.

**14.** Schaltungsanordnung nach Anspruch 13, **gekennzeichnet durch** einen Kondensator C3 zur dynamisch verzögerten Freigabe des ersten steuerbaren Schaltmittels (4).

**15.** Schaltungsanordnung nach einem oder mehreren der vorherigen Ansprüche, **gekennzeichnet durch** Einstellmittel zur Vorauswahl unterschiedlicher Spannungsniveaus der Ansteuerspannung

**Claims**

**1.** Circuit arrangement comprising two input terminals (A1, A2) for connecting an activation voltage ($U_{in,DC/AC}$) and comprising two output terminals (Q1, Q2) for connecting a load (L), the two inputs (A1, A2) of the circuit arrangement being able to be loaded with different types (AC, DC) of activation voltages ($U_{in,DC/AC}$), **characterised in that**

- the load (L) can be supplied as a function of a defined switch-on threshold and a defined switch-off threshold of the activation voltage,
- a module (2) for converting the activation voltage ($U_{in,DC/AC}$) into a direct current ($U_{ns,DC}$) which is linearly dependent thereon for supplying the load (L),
- first controllable switching means (4) for closing and opening the load circuit,
- a control unit (6, 8) for activating the first switching means (4) as a function of load parameters,
- means (10; 10') for distinguishing different types of voltage of the activation voltage ($U_{in,DC/AC}$,
- means (12; 12') for detecting the switch-on and switch-off threshold,
- second controllable switching means (14; 14', 14") for releasing or blocking the load switching current and
- means (9; 9') for activating the second switching means (14; 14', 14") as a function of exceeding or not attaining the switch-on or switch-off threshold.

**2.** Circuit arrangement according to claim 1, **characterised in that** the module (2) comprises a series connection of a diode D1 and a capacitor C1 arranged between the input terminals A1, A2.

**3.** Circuit arrangement according to either claim 1 or claim 2, **characterised in that** the first controllable switching means (4) are formed by a controllable semiconductor switch, in particular an N-channel FET, connected in series with the load L.

**4.** Circuit arrangement according to one or more of the preceding claims, **characterised in that** the means (10, 10') for distinguishing the activation voltage is formed by a series connection arranged between the input terminals A1, A2 and comprising a parallel arrangement of a capacitor C2 and a Zener diode Z1, a diode D2 and a resistor R1.

**5.** Circuit arrangement according to claim 4, **characterised in that**, parallel to the Zener diode Z1, a voltage former consisting of a series connection of Zener diode Z2 and resistor R2, is connected in parallel and the Zener diodes Z1; Z2 are connected to one another at their anodes.

**6.** Circuit arrangement according to one or more of the preceding claims, **characterised in that** the second controllable switching means (14', 14") are formed by two controllable semiconductor switches connected in series or in parallel with the load L.

**7.** Circuit arrangement according to one of more of the preceding claims, **characterised in that** the means (9') for activating the second switching means (14', 14") are formed by the detection means (12') configured as a comparator and the means (10') for distinguishing the activation voltage.

**8.** Circuit arrangement according to one or more of the preceding claims, **characterised in that** the detection means (12') are connected in parallel with the Zener diode Z1 and are configured as a comparator formed from a series connection of a resistor R4 and a Zener diode Z4, the Zener diodes Z1 and Z4 being connected to one another at their cathodes.

9.  Circuit arrangement according to claim 8, **characterised in that** the comparator, at the junction thereof between resistor R4 and anode of the Zener diode Z4, is connected to the control connection of the one switching means (14").

10. Circuit arrangement according to either claim 7 or claim 8, **characterised in that** the voltage former Z2, R2, at the junction thereof between the cathode of the Zener diode Z2 and the resistor R2, is connected to the cathode of a Zener diode Z3, which, on the one hand, is guided at the anode thereof to the control connection of the other switching means (14') and, on the other hand, is guided by a resistor R3 at the junction of said switching means (14') with the first controllable switching means (4).

11. Circuit arrangement according to one or more of the previous claims 1 to 5, **characterised in that** the second controllable switching means (14) are formed by a controllable semiconductor switch connected in parallel or in series with the load.

12. Circuit arrangement according to claim 11, **characterised in that** the means (9) for activating the switching means (14) are formed by the detection means (12), configured as a window comparator, and the means (10) for distinguishing the activation voltage.

13. Circuit arrangement according to one or more of the preceding claims, **characterised in that** the control unit (6, 8) is configured for controlling the load current.

14. Circuit arrangement according to claim 13, **characterised by** a capacitor C3 for dynamically delaying the release of a first controllable switching means (4).

15. Circuit arrangement according to one or more of the preceding claims, **characterised by** adjustment means for preselecting different voltage levels of the activation voltage.

## Revendications

1.  Ensemble circuit pourvu de deux bornes d'entrée (A1, A2) pour le raccordement d'une tension de commande ($U_{in,DC/AC}$) et de deux bornes de sortie (Q1, Q2) pour le raccordement d'une charge (L),

    - les deux entrées (A1, A2) de l'ensemble circuit pouvant être alimentées par des tensions de commande ($U_{in,DC/AC}$) de types différents (AC, DC), **caractérisé par**
    - **le fait que** la charge (L) peut être alimentée en fonction d'un seuil d'enclenchement défini et d'un seuil de déclenchement défini de la tension de commande,
    - un sous-ensemble (2) pour la conversion de la tension de commande ($U_{in,DC/AC}$ en une tension continue ($U_{ns,DC}$) qui en dépend linéairement et est destinée à alimenter la charge L,
    - des premiers moyens de commutation commandables (4) pour la fermeture et l'ouverture du circuit de commutation de charge,
    - une unité de régulation (6, 8) pour la commande des premiers moyens de commutation (4) en fonction de paramètres de charge,
    - des moyens (10; 10') pour établir une discrimination entre différents types de tension de la tension de commande ($U_{in,DC/AC}$),
    - des moyens (12; 12') pour la détection du seuil d'enclenchement et de déclenchement,
    - des seconds moyens de commutation commandables (14; 14', 14") pour le déblocage respectivement blocage du courant de commutation de charge et
    - des moyens (9; 9') pour la commande des seconds moyens de commutation (14; 14', 14") en fonction du dépassement resp. sous-passement du seuil d'enclenchement resp. déclenchement.

2.  Ensemble circuit selon la revendication 1, **caractérisé par le fait que** le sous-ensemble (2) comprend un montage en série d'une diode D1 et d'un condensateur C1 situé entre les bornes d'entrée A1, A2.

3.  Ensemble circuit selon la revendication 1 ou 2, **caractérisé par le fait que** les premiers moyens de commutation commandables (4) sont formés par un commutateur semi-conducteur commandable, notamment un transistor FET à N canaux, branché en série avec la charge L.

**4.** Ensemble circuit selon une ou plusieurs des revendications précédentes, **caractérisé par le fait que** les moyens (10, 10') de discrimination de la tension de commande sont formés par un circuit série comprenant un montage en parallèle d'un condensateur C2 et d'une diode Zener Z1, une diode D2 et une résistance R1 situé entre les bornes d'entrée A1, A2.

**5.** Ensemble circuit selon la revendication 4,**caractérisé par le fait qu'**un formeur de tension formé d'un montage en série d'une diode Zener Z2 et d'une résistance R2 est branché en parallèle parallèlement à la diode Zener Z1 et les diodes Zener Z1; Z2 sont reliées l'une à l'autre du côté de leur anode.

**6.** Ensemble circuit selon une ou plusieurs des revendications précédentes, **caractérisé par le fait que** les seconds moyens de commutation commandables (14', 14") sont formés par deux commutateurs semiconducteurs commandables branchés en série ou en parallèle avec la charge L.

**7.** Ensemble circuit selon une ou plusieurs des revendications précédentes, **caractérisé par le fait que** les moyens (9') pour la commande des seconds moyens de commutation (14', 14") sont formés par les moyens de détection (12') exécutés en tant que comparateur et par les moyens (10') de discrimination de la tension de commande.

**8.** Ensemble circuit selon une ou plusieurs des revendications précédentes, **caractérisé par le fait que** les moyens de détection (12') sont exécutés en tant que comparateur formé d'un montage en série d'une résistance R4 et d'une diode Zener Z4, se branchant en parallèle avec la diode Zener Z1 et dans lequel les diodes Zener Z1 et Z4 sont reliées l'une à l'autre du côté de leur cathode.

**9.** Ensemble circuit selon la revendication 8, **caractérisé par le fait que** le comparateur est relié, au niveau de son point de jonction entre la résistance R4 et l'anode de la diode Zener Z4, à la borne de commande de l'un des moyens de commutation (14").

**10.** Ensemble circuit selon la revendication 7 ou 8, **caractérisé par le fait que** le formeur de tension Z2, R2 est relié, au niveau de son point de jonction entre la cathode de la diode Zener Z2 et la résistance R2, à la cathode d'une diode Zener Z3 qui, sur le côté de son anode, est emmenée d'une part à la borne de commande de l'autre moyen de commutation (14') et d'autre part, par le biais d'une résistance R3, au point de jonction de ce moyen de commutation (14') avec le premier moyen de commutation commandable (4).

**11.** Ensemble circuit selon une ou plusieurs des revendications précédentes 1-5, **caractérisé par le fait que** les seconds moyens de commutation commandables (14) sont formés par un commutateur semi-conducteur commandable branché en parallèle ou en série avec la charge.

**12.** Ensemble circuit selon la revendication 11, **caractérisé par le fait que** les moyens (9) pour la commande du moyen de commutation (14) sont formés par les moyens de détection (12) exécutés en tant que le comparateur à fenêtre et par les moyens (10) de discrimination de la tension de commande.

**13.** Ensemble circuit selon une ou plusieurs des revendications précédentes, **caractérisé par le fait que** l'unité de régulation (6, 8) est exécutée pour la régulation du courant de charge.

**14.** Ensemble circuit selon la revendication 13, **caractérisé par** un condensateur C3 pour le déblocage avec un retard dynamique du premier moyen de commutation commandable (4).

**15.** Ensemble circuit selon une ou plusieurs des revendications précédentes, **caractérisé par** des moyens de réglage pour la présélection de différents niveaux de tension de la tension de commande.

Q1  L  $u_{Last}$  Q2

14

$s_f$

9

Spannungs-diskriminator — 10
+
Fensterkomparator — 12

D

$I_{Last}$

S  4  G  $s_g$

Regler

8

$U_{ns,DC}$

$u_r$

Referenzsignal-bilder

6

Eingangsstufe

2

A1

$U_{in,DC/AC}$

A2

*FIG. 1*

a)

$U_{Start,AC}$

$U_{ns,DC}$

$U_{Start,DC}$
$U_{Sperr,AC}$

$U_{in,DC}$

**FIG. 2**

b)

erstes steuerbares
Schaltmittel (4)
gesperrt

$\overline{s}_g$

erstes steuerbares
Schaltmittel (4)
freigegeben

h

$U_{ns,DC}$

l

c)

zweites steuerbares
Schaltmittel (14)
gesperrt

$s_f$

h

$U_{ns,DC}$

l

d)

$U_{Last}$
$I_{Last}$

Ansteuerung der Last (L)

gesperrt

freigegeben

$U_{ns,DC}$

$U_{Start,DC}$

EP 1 293 030 B1

**a)**

$U_{Start,AC}$  $U_{ns,DC}$

$U_{Start,DC}$

$U_{Sperr,AC}$

$U_{in,AC}$

**b)**

$\bar{s}_g$

erstes steuerbares Schaltmittel (4) gesperrt

erstes steuerbares Schaltmittel (4) freigegeben

h

l

$U_{ns,DC}$

$U_{Start,DC}$

**c)**

$s_f$

zweites steuerbares Schaltmittel (14) gesperrt

zweites steuerbares Schaltmittel (14) leitend

zweites steuerbares Schaltmittel (14) gesperrt

h

l

$U_{ns,DC}$

$U_{Sperr,AC}$

$U_{Start,AC}$

**d)**

$U_{Last}$
$I_{Last}$

$I_{Last}$

$U_{Last}, I_{Last}$

$U_{Last}$

$U_{ns,DC}$

$U_{Start,DC}$

$U_{Start,AC}$

Ansteuerung der Last:  gesperrt  freigegeben

*FIG. 3*

EP 1 293 030 B1

A1

$U_{in}DC/AC$

A2

Spannungs-diskriminator 10'

+

Komparator 12'

9'

$S_{f2}$

$S_{f1}$

Eingangsstufe

2

$U_{ns,DC}$

Referenzsignal-bilder

6

$u_r$

8

Regler

$I_{Last}$

$S_{sg}$

D

S 4

G

14''

14'

SF1

SF2

L

$U_{Last}$

**FIG. 4**

**FIG. 5**

EP 1 293 030 B1

*FIG. 6*

EP 1 293 030 B1

*FIG. 7*

*FIG. 8*

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5953221 A